# EUROPÄISCHE PATENTSCHRIFT

(11) **EP 2 147 831 B1**
(45) Veröffentlichungstag und Bekanntmachung des Hinweises auf die Patenterteilung: **02.03.2011**
(21) Anmeldenummer: 08160891.1
(22) Anmeldetag: 22.07.2008
(51) Int. Cl.: B60R 21/13

(54) **Überrollschutzsystem für Kraftfahrzeuge**
Rollover protection system for motor vehicles
Système de protection en cas de tonneaux pour véhicules automobiles

(43) Veröffentlichungstag der Anmeldung: 27.01.2010
(73) Patentinhaber: ISE Automotive GmbH, 51702 Bergneustadt (DE)
(72) Erfinder: Lang, Jozsef, 1131 Budapest (HU); Nagy, Géza, 2013 Pomaz (HU)
(74) Vertreter: Wenzel & Kalkoff

(56) Entgegenhaltungen:
- DE-A1-102006 028 664
- DE-B3-102005 059 910
- DE-C1- 10 132 421
- DE-T5-112005 003 544
- JP-A- 7 164 985

## Beschreibung

Die Erfindung betrifft ein Überrollschutzsystem für Kraftfahrzeuge mit einem von einer Antriebsvorrichtung aus einer Ruhestellung in eine Schutzstellung ausfahrbaren Überrollkörper, der zwei Schenkel aufweist, die im Bereich ihrer ausfahrenden Enden gelenkig miteinander verbunden sind, von denen ein erster Schenkel mit seinem anderen Ende fahrzeugfest schwenkbar gelagert ist und ein zweiter Schenkel längs verschieblich in einem Führungsgehäuse angeordnet ist, das seinerseits fahrzeugfest schwenkbar gelagert ist.

Neben Überrollschutzsystemen mit rein translatorisch ausfahrenden Überrollkörpern sind auch Überrollkörper mit zwei schwenkbaren Schenkeln bekannt geworden, die im Bereich ihrer ausfahrenden Enden gelenkig miteinander verbunden sind.

In der DE 11 2005 003 544 T5 wird eine Schutzvorrichtung beschrieben, bei der der Überrollkörper aus zwei Stangen oder Schenkeln besteht, die im Bereich ihrer ausfahrenden Enden gelenkig miteinander verbunden sind. Dabei ist das andere Ende des ersten Schenkels fahrzeugfest schwenkbar gelagert und das andere Ende des zweiten Schenkels in einer fahrzeugfesten Kulisse translatorisch verschiebbar geführt.

Zur Erhaltung der Konkurrenzfähigkeit müssen die Hersteller derartiger Überrollschutzsysteme stets bemüht sein, den konstruktiven Aufwand zu verringern und die Systeme zu vereinfachen und zu verbilligen. Deswegen wird in der DE 10 2008 018 484 vorgeschlagen - ausgehend von der vorgenannten Schutzvorrichtung für zwei Fahrzeugsitze - für die innenseitigen Schenkel einen gemeinsamen Anlenkpunkt vorzusehen und die außenseitigen Schenkel endseitig in einer fahrzeugfesten Kulisse zu führen.

Aus der DE 11 2005 059 910 B3 ist ein Überrollschutzsystem bekannt, bei dem der Überrollkörper aus zwei ineinander gefalteten Schenkeln besteht, die beide mit einem Ende fahrzeugfest schwenkbar gelagert sind und deren ausfahrende Enden bei Erreichen der Schutzstellung gelenkig miteinander gekoppelt werden.

Bei diesem Überrollschutzsystem wird der Überrollkörper aus zwei schwenkbaren Schenkeln gebildet, wobei jedoch statt der translatorischen Bewegung in einer fahrzeugfesten Kulisse eine translatorische Bewegung des ausfahrenden Endes des einen Schenkels innerhalb des anderen Schenkels vorgesehen ist.

Schließlich ist aus der DE 10 2006 028 664 A1 das eingangs beschriebene, gattungsbildende Überrollschutzsystem bekannt geworden.

Ausgehend von diesem Überrollschutzsystem liegt der Erfindung die Aufgabe zugrunde, eine Weiterbildung anzugeben, bei der die Vorgaben Vereinfachung, Verbilligung und Platzersparnis zu berücksichtigen sind.

Zur Lösung dieser Aufgabe wird erfindungsgemäß vorgeschlagen, als Halte- und Verriegelungsvorrichtung eine Klinke vorzusehen, die in Ruhestellung mit einem Halteelement und in Schutzstellung mit einem Verriegelungselement am zweiten Schenkel zusammenwirkt und die um die gleiche Achse schwenkbar ist, wie das Führungsgehäuse.

Damit wird eine starke bauliche Vereinfachung erreicht, ohne dass Einschränkungen hinsichtlich Stabilität und Funktionssicherheit in Kauf genommen werden müssen.

In weiterer Ausbildung des Erfindungsgedankens ist vorgesehen, dass als Antriebsvorrichtung eine Drehfeder vorgesehen ist.

Alternativ kann als Antriebsvorrichtung eine zwischen dem zweiten Schenkel und dem schwenkbaren Führungsgehäuse eingespannte Feder vorgesehen werden.

Das Überrollschutzsystem umfasst außerdem in an sich bekannter Weise eine lösbare Haltevorrichtung, mittels derer der zweite Schenkel in Ruhestellung im Führungsgehäuse unverschieblich fixiert ist.

Ferner ist in ebenfalls bekannter Weise eine Verriegelungsvorrichtung vorgesehen, mittels derer der Überrollkörper in der Schutzstellung gegen Rückschwenken der Schenkel gesichert ist.

Die Klinke kann zur Aktivierung des Überrollkörpers mittels eines Aktuators geschwenkt werden, wobei vor allem pyrotechnische Aktuatoren in Betracht kommen.

Eine besonders Platz sparende Ausführung erreicht man, wenn das mit dem zweiten Schenkel gelenkig verbundene Ende des ersten Schenkels ähnlich einem Krückstockgriff abgebogen ist.

Die Ausfahrbewegung des zweiten Schenkels relativ zum Führungsgehäuse kann durch einen Anschlag begrenzt werden.

Ferner wird zweckmäßigerweise ein Basis-Montage-Teil vorgesehen, in dem der erste Schenkel und das Führungsgehäuse schwenkbar gelagert sind.

Weitere Einzelheiten und Vorteile des erfindungsgemäßen Überrollschutzsystems werden anhand der in den Figuren 1 bis 7 dargestellten Ausführungsbeispiele nähert erläutert.

Es zeigen:
- Figuren 1 bis 5: eine erste Ausführungsform in verschiedenen pers- pektivischen Darstellungen und Schnitten, bei der als Antriebsvorrichtung eine zwischen dem Füh- rungsgehäuse 3 und dem zweiten Schenkel 2 ein- gespannte Feder 5 vorgesehen ist,
- Figuren 6 und 7: eine Ausführungsform, bei der eine im Drehpunkt des ersten Schenkels angeordnete, und am ersten Schenkel angreifende Drehfeder 4 vorgesehen ist.

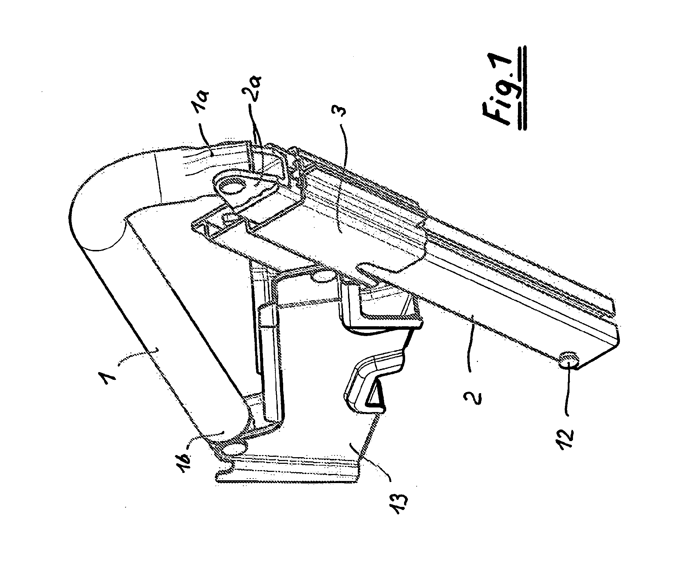

In der Figur 1 ist die erste Ausführungsform perspektivisch in eingefahrenem Zustand dargestellt. Im Basis-Montageteil 13 sind der Schenkel 1 und das Führungsgehäuse schwenkbar gelagert, wofür auch der Terminus "fahrzeugfest" verwendet wird, weil beide Drehpunkte bei einer Aktivierung des Überrollschutzsystems relativ zum Fahrzeug nicht verändert werden. Die ausfahrenden Enden 1 a und 2 a der Schenkel 1 und 2 sind an ihren ausfahrenden Enden gelenkig miteinander verbunden, wobei das Ende 1 a zwischen dem als Gabel ausgebildeten Ende 2 a angeordnet ist. Mit 12 ist ein Anschlag bezeichnet, durch den die Ausfahrbewegung des zweiten Schenkels 2 relativ zum Führungsgehäuse begrenzt wird.

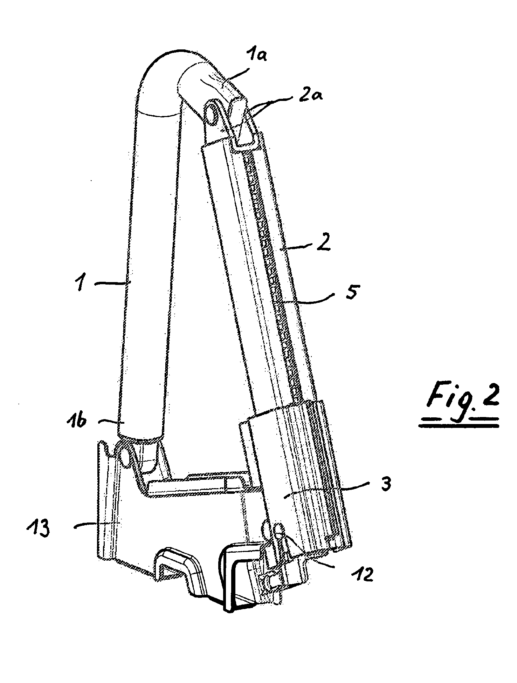

In Fig. 2 ist die Ausführungsform nach Fig. 1 in ausgefahrenem Zustand perspektivisch dargestellt. Der Anschlag 12 ist in eine Ausnehmung des Führungsgehäuses 3 eingefahren, wodurch eine weitere Auswärtsbewegung des Schenkels 2 verhindert wird. Ferner ist aus dieser Darstellung die zwischen dem zweiten Schenkel 2 und dem Führungsgehäuse 3 eingespannte Feder 5 ersichtlich, die als Antriebsvorrichtung für das Ausfahren des Überrollkörpers dient.

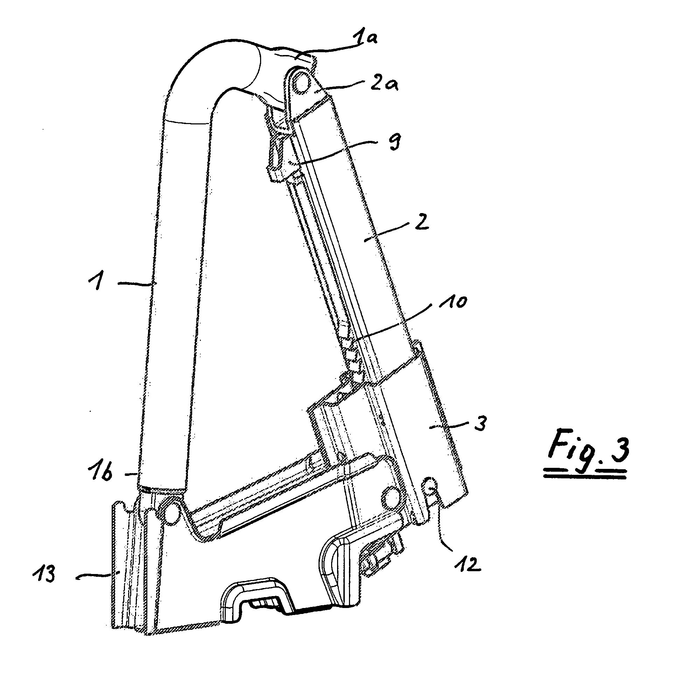

In Fig. 3 ist die Ausführungsform gemäß Fig. 1 in ausgefahrenem Zustand unter einem anderen Blickwinkel perspektivisch dargestellt. Zusätzlich zu der Darstellung gemäß Fig. 2 sind hier noch das Halteelement 9 und das Verriegelungselement 10, beide als Teile des zweiten Schenkels 2 oder einstückig an diesem ausgeformt ersichtlich.

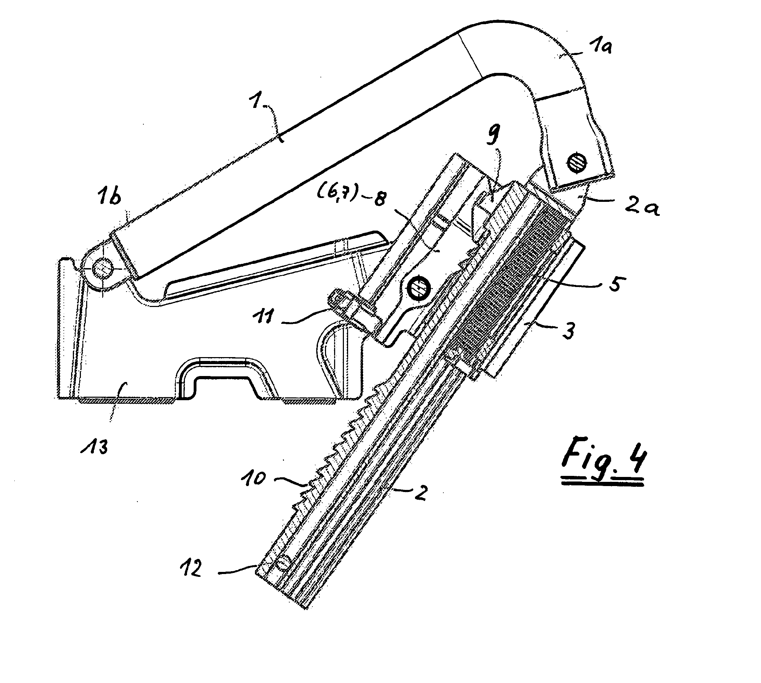

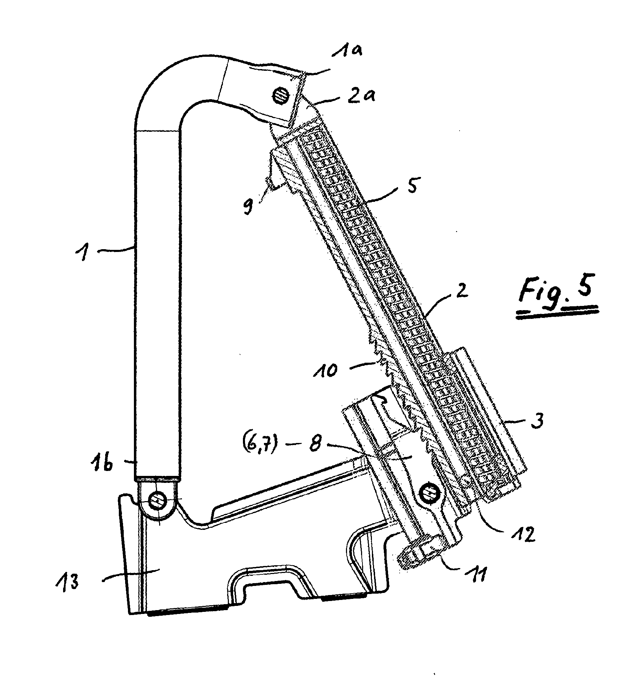

Aus der Schnittdarstellung gemäß Fig. 4 ist einmal ersichtlich, wie die Feder 5 zwischen Führungsgehäuse 3 und Schenkel 2 eingespannt ist und zum anderen wie die Haltevorrichtung 6 und die Verriegelungsvorrichtung 7 ausgebildet sind. Beide Funktionen sind in der drehbar gelagerten Klinke 8 zusammengefasst, die in der Ruhestellung - wie dargestellt - mit dem Halteelement 9 am zweiten Schenkel 2 zusammenwirkt und - in ausgefahrener Stellung, siehe Fig. 5 - durch Zusammenwirken mit dem Verriegelungselement 10 am zweiten Schenkel 2 ein Rückschwenken der Schenkel 1, 2 verhindert.

Zur Aktivierung des Überrollschutzsystems, d.h. zum Ausfahren des Überrollkörpers ist ein Aktuator 11 vorgesehen, der vorzugsweise pyrotechnisch ausgebildet ist und der aktiviert wird, wenn im Fahrzeug angeordnete Beschleunigungssensoren entsprechende Signale generieren. Im Auslösefall wird die Klinke 8 um den Drehpunkt des Führungsgehäuses im Gegen-Uhrzeigersinn gedreht, wodurch das obere Ende der Klinke mit dem Halteelement 9 außer Eingriff gebracht und damit die Feder 5 zur Expansion freigegeben wird. Unter dem Einfluss der Federkraft wird der Schenkel 1 um seinen fahrzeugfesten Drehpunkt in der Basis-Montageeinheit 13 im Gegen-Uhrzeigersinn verschwenkt. Außerdem wird das Führungsgehäuse gleichsinnig verschwenkt und zudem der Schenkel 2 relativ zum Führungsgehäuse 3 nach oben - außen - getrieben. Wenn die Schutzstellung gemäß Fig. 5 erreicht ist, wirkt der gezahnte Teil der Klinke 8 mit dem in Gegenrichtung gezahnten Ven-iegelungselement 10 zusammen, wodurch ein Rückschwenken der Schenkel 1 und 2 aus der Schutzstellung verhindert wird.

Die zuletzt erwähnte Verriegelungsstellung ist aus Fig. 5 ersichtlich, die - abgesehen von den geänderten Positionen der Schenkel 1, 2 und des Führungsgehäuses 3 - noch die expandierte Feder 5 zeigt.

Weitere Erläuterungen sind nicht erforderlich, weil alle wesentlichen Aspekte bereits beschrieben sind und sich im Übrigen aus einem Vergleich der Figuren ohne weiteres ergeben.

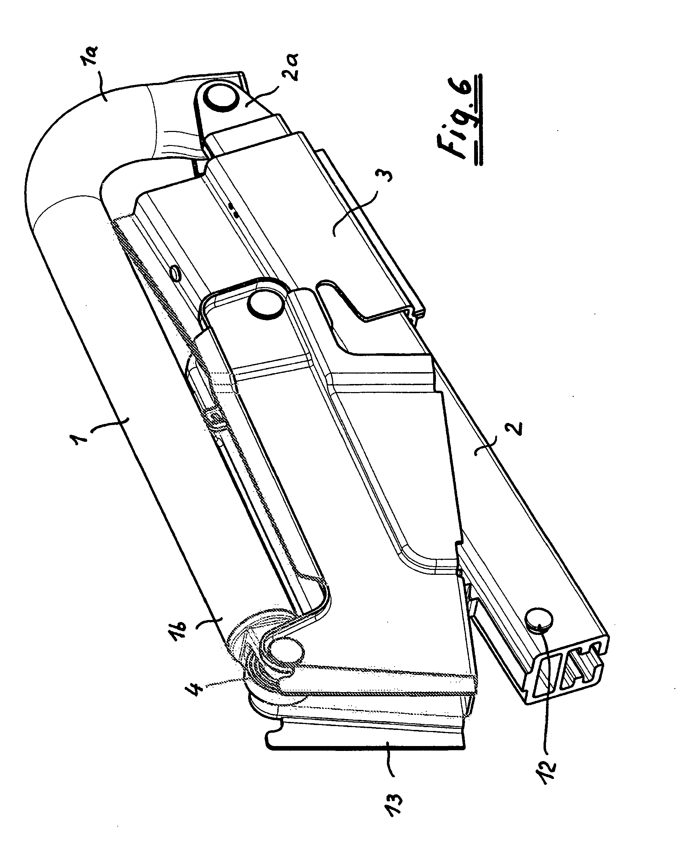

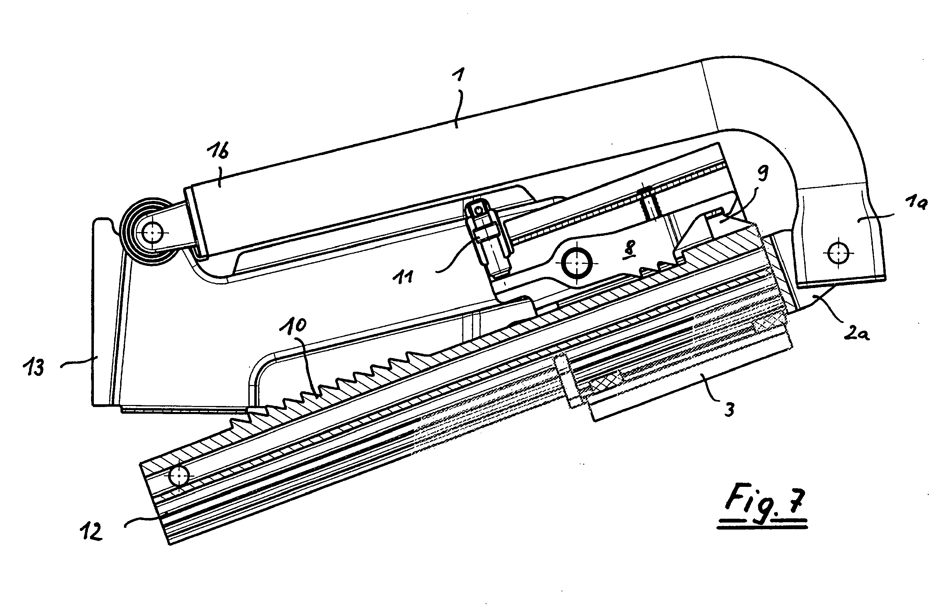

Das gilt im Wesentlichen auch für die Figuren 6 und 7, in denen eine Ausführungsform dargestellt ist, die noch stärker eingefaltet bzw. komprimiert ist, als die Ausführungsform der Figuren 1 bis 5 und deswegen noch weniger Bauraum beansprucht. Für die Ausführungsform der Figuren 6 und 7 ist als Antriebsvorrichtung eine Drehfeder 4 vorgesehen, die zwischen dem Basis-Montageteil 13 und dem Schenkel 1 eingespannt ist. Sie kann wahlweise auch zwischen Basis-Montageteil 13 und Führungsgehäuse 3 eingespannt werden.

Die in den Figuren 1 bis 7 dargestellten Ausführungsbeispiele zeigen, dass das erfindungsgemäße Überrollschutzsystem mit relativ wenigen Bauteilen auskommt und insbesondere sehr Platz sparend konzipiert ist. Dadurch ergeben sich Vorteile bezüglich der Herstellungskosten und der Anordnung im Fahrzeug.

## Patentansprüche

1. Überrollschutzsystem für Kraftfahrzeuge mit einem von einer Antriebsvorrichtung aus einer Ruhestellung in eine Schutzstellung ausfahrbaren Überrollkörper, der zwei Schenkel (1, 2) aufweist, die im Bereich ihrer ausfahrenden Enden (1 a, 2a) gelenkig miteinander verbunden sind, von denen ein erster Schenkel (1) mit seinem anderen Ende (1 b) fahrzeugfest schwenkbar gelagert ist und ein zweiter Schenkel (2) längs verschieblich in einem Führungsgehäuse (3) angeordnet ist, das seinerseits fahrzeugfest schwenkbar gelagert ist, **dadurch gekennzeichnet, dass** als Halte- und Verriegelungsvorrichtung (6, 7) eine Klinke (8) vorgesehen ist, die in Ruhestellung mit einem Halteelement (9) und in Schutzstellung mit einem Verriegelungselement (10) am zweiten Schenkel (2) zusammen wirkt und die um die gleiche Achse schwenkbar ist, wie das Führungsgehäuse (3).

2. Überrollschutzsystem für Kraftfahrzeuge nach Anspruch 1, **dadurch gekennzeichnet, dass** als Antriebsvorrichtung eine Drehfeder (4) vorgesehen ist.

3. Überrollschutzsystem nach Anspruch 1, **dadurch gekennzeichnet, dass** als Antriebsvorrichtung eine zwischen dem zweiten Schenkel (2) und dem schwenkbaren Führungsgehäuse (3) eingespannte Feder (5) vorgesehen ist.

4. Überrollschutzsystem nach einem der Ansprüche 1 bis 3, **dadurch gekennzeichnet, dass** eine lösbare Haltevorrichtung (6) vorgesehen ist, mittels derer der zweite Schenkel (2) in Ruhestellung im Führungsgehäuse (3) unverschieblich fixiert ist.

5. Überrollschutzsystem nach einem der Ansprüche 1 bis 4, **dadurch gekennzeichnet, dass** eine Verriegelungsvorrichtung (7) vorgesehen ist, mittels derer der Überrollkörper in der Schutzstellung gegen Rückschwenken der Schenkel (1, 2) gesichert ist.

6. Überrollschutzsystem nach Anspruch 1, **dadurch gekennzeichnet, dass** die Klinke (8) zur Aktivierung des Überrollkörpers mittels eines - vorzugsweise pyrotechnischen - Aktuators (11) schwenkbar ist.

7. Überrollschutzsystem nach einem der Ansprüche 1 bis 6, **dadurch gekennzeichnet, dass** das mit dem zweiten Schenkel (2) gelenkig verbundene Ende (1 a) des ersten Schenkels (1) ähnlich einem Krückstockgriff abgebogen ist.

8. Überrollschutzsystem nach einem der Ansprüche 1 bis 7, **dadurch gekennzeichnet, dass** die Ausfahrbewegung des zweiten Schenkels (2) relativ zum Führungsgehäuse (3) durch einen Anschlag (12) begrenzt ist.

9. Überrollschutzsystem nach einem der Ansprüche 1 bis 8, **dadurch gekennzeichnet, dass** ein Basis-Montageteil (13) vorgesehen ist, in dem der erste Schenkel (1) und das Führungsgehäuse (3) schwenkbar gelagert sind.

## Claims

1. Rollover protection system for motor vehicles, comprising a rollover body which may be extended by a drive device from a resting position into a protective position, and which comprises two limbs (1, 2) which in the region of their extended ends (1a, 2a) are connected to one another in an articulated manner, of which a first limb (1) is pivotably mounted with its other end (1b) fixed to the vehicle and a second limb (2) is arranged longitudinally displaceably in a guide housing (3), which in turn is pivotably mounted and fixed to the vehicle, **characterised in that** a latch (8) is provided as a retaining and locking device (6, 7) which in the resting position cooperates with a retaining element (9) and in the protective position cooperates with a locking element (10) on the second limb (2), and which is pivotable about the same axis as the guide housing (3).

2. Rollover protection system for motor vehicles according to Claim 1, **characterised in that** a torsion spring (4) is provided as a drive device.

3. Rollover protection system according to Claim 1, **characterised in that** a spring (5) tensioned between the second limb (2) and the pivotable guide housing (3) is provided as a drive device.

4. Rollover protection system according to one of Claims 1 to 3, **characterised in that** a releasable retaining device (6) is provided, by means of which the second limb (2) is undisplaceably fixed in the resting position in the guide housing (3).

5. Rollover protection system according to one of Claims 1 to 4, **characterised in that** a locking device (7) is provided, by means of which the rollover body is secured in the protective position against the pivoting-back of the limbs (1, 2).

6. Rollover protection system according to Claim 1, **characterised in that** the latch (8) is able to be pivoted by means of a - preferably pyrotechnic - actuator (11) for activating the rollover body.

7. Rollover protection system according to one of Claims 1 to 6, **characterised in that** the end (1a) of the first limb (1) connected in an articulated manner to the second limb (2) is bent-back in a manner similar to a walking stick handle.

8. Rollover protection system according to one of Claims 1 to 7, **characterised in that** the extending movement of the second limb (2) relative to the guide housing (3) is limited by a stop (12).

9. Rollover protection system according to one of Claims 1 to 8, **characterised in that** a base mounting part (13) is provided in which the first limb (1) and the guide housing (3) are pivotably mounted.

## Revendications

1. Système de protection en cas de tonneaux pour véhicules automobiles, avec un corps contre les tonneaux pouvant être sorti par un dispositif d'entraînement à partir d'une position de repos vers une position de protection, corps contre les tonneaux qui présente deux branches (1, 2) qui sont raccordées l'une à l'autre de façon articulée dans la zone de leurs extrémités sortantes (1a, 2a), et dont une première branche (1) est, par son autre extrémité (1b), supportée en pivotement de façon fixe par rapport au véhicule, et dont une deuxième branche (2) est disposée de façon mobile longitudinalement dans un carter de guidage (3) qui est de son côté supporté en pivotement de façon fixe par rapport au véhicule, **caractérisé en ce qu'**un cliquet (8) est prévu en tant que dispositif de retenue et de verrouillage (6, 7) qui, en position de repos, coopère avec un élément de retenue (9) et, en position de protection, coopère avec un élément de verrouillage (10) sur la deuxième branche (2), et peut pivoter autour du même axe que le carter de guidage (3).

2. Système de protection en cas de tonneaux pour véhicules automobiles selon la revendication 1, **caractérisé en ce que**, en tant que dispositif d'entraînement, il est prévu un ressort de torsion (4).

3. Système de protection en cas de tonneaux selon la revendication 1, **caractérisé en ce que**, en tant que dispositif d'entraînement, il est prévu un ressort (5) serré entre la deuxième branche (2) et le carter de guidage (3) pivotant.

4. Système de protection en cas de tonneaux selon une des revendications 1 à 3, **caractérisé en ce qu'**il est prévu un dispositif de retenue (6) détachable au moyen duquel la deuxième branche (2) dans l'état de repos est fixée de façon non mobile dans le carter de guidage (3).

5. Système de protection en cas de tonneaux selon une des revendications 1 à 4, **caractérisé en ce qu'**il est prévu un dispositif de verrouillage (7) au moyen duquel le corps contre les tonneaux dans la position de protection est protégé contre un pivotement de retour des branches (1, 2).

6. Système de protection en cas de tonneaux selon la revendication 1, **caractérisé en ce que** le cliquet (8) pour l'activation du corps contre les tonneaux peut être pivoté au moyen d'un actionneur (11) - de préférence pyrotechnique.

7. Système de protection en cas de tonneaux selon une des revendications 1 à 6, **caractérisé en ce que** l'extrémité (1 a) de la première branche (1) raccordée de façon articulée à la deuxième branche (2) est recourbée de façon similaire à une poignée de béquille.

8. Système de protection en cas de tonneaux selon une des revendications 1 à 7, **caractérisé en ce que** le mouvement de sortie de la deuxième branche (2) par rapport au carter de guidage (3) est limité par une butée (12).

9. Système de protection en cas de tonneaux selon une des revendications 1 à 8, **caractérisé en ce qu'**il est prévu une partie de montage de base (13) dans laquelle la première branche (1) et le carter de guidage (3) sont supportés en pivotement.
